(19) Europäisches Patentamt
European Patent Office
Office européen des brevets

(11) Publication number: **0 396 122 A2**

(12) **EUROPEAN PATENT APPLICATION**

(21) Application number: **90108334.5**

(22) Date of filing: **02.05.90**

(51) Int. Cl.[5]: **C08L 83/06, C08G 77/398, C08L 83/08, C08G 77/388, C08G 77/48, //(C08L83/06, 83:08)**

The application is published incomplete as filed (Article 93 (2) EPC). The point in the description or the claim(s) at which the omission obviously occurs has been left blank.

(30) Priority: **02.05.89 US 346572**

(43) Date of publication of application: **07.11.90 Bulletin 90/45**

(84) Designated Contracting States: **AT BE CH DE ES FR GB GR IT LI LU NL SE**

(71) Applicant: **UNION CARBIDE CHEMICALS AND PLASTICS COMPANY, INC.**
**39 Old Ridgebury Road**
**Danbury Connecticut 06817-0001(US)**

(72) Inventor: **Williams, Thomas Charles**
**16 Rolling Hill Road**
**Ridgefield, Connecticut 06877(US)**

(74) Representative: **Behrens, Dieter, Dr.-Ing. et al**
**Wuesthoff & Wuesthoff Patent- und Rechtsanwälte Schweigerstrasse 2**
**D-8000 München 90(DE)**

(54) **Ambient temperature curable polyorganosiloxanes.**

(57) Polyorganosiloxanes that are curable to a crosslinked solid material at ambient temperature upon exposure to an oxidizing agent or an aldehyde, wherein the polyorganosiloxanes contain, per molecule, at least one monovalent (hydroxyphenyl) alkyl radical bonded to a silicon atom of said polyorganosiloxane through a silicon-to-carbon bond and compositions containing the curable polyorganosiloxanes and a metallopolyorganosiloxane comprising the reaction product of a salt of a metal selected from the group consisting of copper, cobalt, manganese, cerium and mixtures thereof and a polyorganosiloxane containing at least one monovalent (2-hydroxybenzaldimino) alkyl radical bonded to a silicon atom of said polyorganosiloxane through a silicon-to-carbon bond. The compositions can also contain fillers, plasticizers and other adjuvants.

EP 0 396 122 A2

# AMBIENT TEMPERATURE CURABLE POLYORGANOSILOXANES

## BACKGROUND OF THE INVENTION

### 1. Field of the Invention

This invention relates to a polyorganosiloxane composition which cures to a solid material at ambient temperature either upon exposure to gaseous oxygen or upon admixture with a suitable oxidant such an organic acyl peroxide and to an ambient temperature curable polyorganosiloxane component thereof. In another aspect, the invention particularly relates to an ambient temperature curable two-component polyorganosiloxane composition and to processes for preparing the polyorganosiloxane components of the two-component composition.

More specifically, this invention relates to ambient temperature curable polyorganosiloxanes containing at least one (hydroxyphenyl)alkyl group per molecule, and to metallopolyorganosiloxanes comprising chelates of an oxidant metal, such as copper, with (2-hydroxyphenylmethimino)-alkyl terminated polydimethylsiloxanes and to the use of such metallopolyorganosiloxanes as curatives (catalysts) for said ambient temperature curable polyorganosiloxanes in the presence of gaseous oxygen or another suitable oxidant.

The compositions of the present invention are useful as casting, embedment, and encapsulation media and as sealants, caulkings, coatings and adhesives.

### 2. Description of Related Art

Several types of ambient temperature curable (room temperature vulcanizable or RTV) polyorganosiloxane compositions are described in the prior art as discussed below:

### A. Siloxanol/Silicate Type

The earliest known room temperature curable polyorganosiloxane system employed linear or lightly branched polyorganosiloxanes having terminal silanol groups. Alkyl silicates or alkyl polysilicates, such as tetraethyl orthosilicate, or their partially hydrolyzed and condensed products are used as curatives (crosslinking agents) in the presence of metal carboxylate catalysts, generally tin compounds, such as stannous octoate, dibutytin dilaurate and the like. Ancillary components such as fillers, plasticizers, colorants and the like also are often used.

This system usually is prepared in two parts to keep the curable siloxanol polymer separate from the curing agents during storage. At the time of use, the two parts are mixed together in specified proportions to initiate curing. The fluid or plastic working life of the mixture generally is limited to a few minutes or at most a few hours. Since accurately measured proportions and thorough mixing are essential for producing uniformly cured articles, useful compositions are limited to those that can be easily poured and stirred, which in turn limits polymer viscosities and the maximum level of filler loading. The presence of at least catalytic amounts of water is essential during the curing process. In fact, unless special steps are taken for excluding water prior to use, there often is sufficient water absorbed on filler components or otherwise fortuitously present to catalyze the crosslinking reactions prematurely and seriously limit storage life.

### B. Moisture Reactive One-Part Type

The next major development in room temperature curable (RTV) polyorganosiloxanes was the so-called one part system. Linear or lightly branched polyorganosiloxane components having reactive groups that readily undergo hydrolysis and condensation to form siloxane linkages are kept in a sealed container and remain plastic and workable until exposed to moisture, usually that available upon normal atmospheric exposure. The reactive groups may be located in either terminal or pendant positions on the polymer chain, or both. Commonly used reactive groups are those containing Si-O-C or Si-N structures, such as -OMe, -OAc, $-NR_2$, and $-ONR'R''$. A curative (crosslinker agent) may be used, and usually is a silane or low

molecular weight polysiloxane having 3 or more reactive groups per molecule. Metal or amine carboxylate salts are used as catalysts.

The one-part compositions eliminate the inconvenience, costs and errors incurred in measuring and mixing at the point of use associated with the two-part system. Since stirring is not necessary, paste forms can be used; thus permitting the use of higher viscosity polymers and a wider range of filler levels to achieve performance improvements.

Unfortunately, use of the moisture reactive polyorganosiloxanes is limited by the nature of the hydrolysis and condensation by-products which are typically objectionably acidic, alkaline, toxic, corrosive, malodorous or in other ways obnoxious. There remains a need, therefore, for room temperature curable (RTV) polyorganosiloxanes which form only innocuous by-products or even no by-products at all.

C. Vinyl Siloxane/Hydrosiloxane Type

In these systems, curing (crosslinking) is accomplished by the catalyzed hydrosilylation of a polyorganosiloxane containing vinyl substituents in the presence of a siloxane curing agent having hydrosiloxane units. Catalysts are usually platinum compounds and are effective at parts per million metal levels. Room temperature curable compositions of this type usually are produced as two part systems in which a linear or lightly branched polyorganosiloxane having vinyl or other terminally unsaturated olefinic groups bonded to silicon in either terminal or pendent locations on the siloxane chain, or both, is kept separate from the low molecular weight polyorganosiloxane curing agent containing three or more hydrosiloxane units per molecule. Since no obnoxious by-products are formed upon curing, this system has a significant advantage relative to the moisture reactive polysiloxanes. However, the normal disadvantages cited for the earlier two component systems, e.g. the silanol/silicate type also hold here. Moreover, the platinum catalyst, essential for initiating crosslinking at room temperature is easily deactivated (poisoned) by trace contaminants. One-part systems can be made using inhibited catalysts but require exposure to elevated temperatures for at least brief periods to activate the catalyst. Thus, they are not true room temperature curable systems.

D. Oxygen Reactive Type

(1) Mercaptoalkyl Type

In this recently developed room temperature curable (RTV) polyorganosiloxane, curing is accomplished by oxidizing mercaptoalkyl substituents to form alkyl disulfide crosslinks. The curable polyorganosiloxane component is a linear or lightly branched polyorganosiloxane having mercaptoalkyl substituents, such as 3-mercaptopropyl, bonded to a silicon atom in the polymer backbone. Optional polyfunctional curatives, i.e., crosslinker components, usually are low molecular weight siloxanes having three or more mercaptoalkyl substituents per molecule. The curing reactions are catalyzed by organic compounds of pro-oxidant metals, such as cobalt carboxylates. The major by-product of the curing reaction is water, which is considered relatively innocuous and can be tolerated in many applications or easily removed, if necessary.

Unfortunately, under some conditions, side reactions may form small amounts of hydrogen sulfide which is malodorous, corrosive and toxic. Also, unreacted mercaptoalkyl groups in the cured compositions can undesirably affect surfaces with which the composition is in contact. For example, sensitive surfaces, such as silver or copper may become tarnished. Furthermore, under atmospheric exposure, disulfide linkages in the cured compositions can degenerate with formation of corrosive sulfur compounds such as sulfurous and sulfuric acids.

(2) Polyunsaturated Olefinic Type

A more recent room temperature curable (RTV) oxygen-reactive polyorganosiloxane system contains a polyorganosiloxane having one or more 1,3- or 1,4-pentadienylene substituents per molecule. This polyorganosiloxane crosslinks at room temperatures through oxidation of polyunsaturated hydrocarbon substituents. Carboxylates of pro-oxidant metals, such as cobalt and manganese, are used as catalysts. This system, which is described in U.S. Patent 4,526,954, does not require moisture, hydrolyzable groups bonded to a silicon atom, or sensitive platinum catalysts and has the additional advantages of being a one-part system which does not form obnoxious by-products.

The ambient temperature curable polyorganosiloxanes of the present invention differ from these known RTV compositions by containing at least one pendant or terminal (hydroxyphenyl)alkyl substituent bonded to a silicon atom on the polysiloxane molecule as a reactive site. Organosiloxanes in the prior art containing such hydroxyphenyl groups can be divided into four classes:

1) Siloxanes containing hydroxyphenyl groups bonded directly to a silicon atom through a phenyl ring carbon.

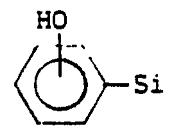

This structure is known to be both hydrolytically and thermally unstable. Organosiloxanes containing such structures are not employed in the present invention.

2) Siloxanes containing hydroxyphenyl groups bonded to a silicon atom through phenyl ring carbon-to-oxygen-to-silicon bonds.

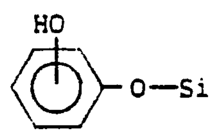

Such phenoxysilicon structures are known to be hydrolytically unstable. Organsiloxanes containing such structures are not employed in the present invention.

3) Siloxanes containing hydroxyphenyl groups bonded to divalent organic radicals which in turn are bonded to a silicon atom through carbon-to-oxygen-to-silicon bonds.

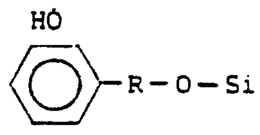

Such organosilicon alkoxides (aryloxides) also are known to be hydrolytically unstable. Organosiloxanes containing such structures are not employed in the present invention.

4) Siloxanes containing hydroxyphenyl groups bonded to divalent organic radicals which in turn are bonded to a silicon atom through carbon-to-silicon bonds.

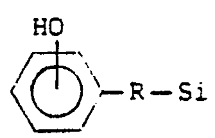

Certain organosiloxanes having hydroxyphenyl groups bonded through 2 or 3-carbon alkylene bridges to a silicon atom are within the scope of the present invention.

FR 1387338 discloses silylalkylphenols and disiloxanylalkylphenols containing 1 to 3 silicon atoms made by hydrosilylation of allylphenols followed by hydrolysis and condensation. The products are low molecular weight, distillable compounds which are stated to be useful as plasticizers as, curing agents for epoxy resins and as coatings for glass fibers. The siloxane products contain hydroxyphenylpropyl substituents bonded to a silicon atom.

U.S. 3,579,467 discloses polyorganosiloxanes which contain tertiary butyl substituted hydroxyaryl radicals bonded to a silicon atom through divalent propylene radicals. All ring positions ortho and para to the hydroxy groups are substituted with organic radicals. U.S. 3,865,759 and U.S. 3,931,047 disclose using the polyorganosiloxanes of U.S. 3,579,167 in stabilizing carrier fluids for stannous carboxylate catalysts.

U.S. 4,430,235 discloses polyorganosiloxanes having aromatic antioxidant moieties bonded there to by nonhydrolyzable linkages. Particularly suitable antioxidant moieties are 2-allyl-4-methylphenol, 2-allyl-6-methyphenol, and 4-allyl-2-methoxyphenol. When reacted with polyorganosiloxanes as represented in

formula (3) of said patent, by platinum catalyzed hydrosilylation, these compounds produce adducts respectively containing the structures

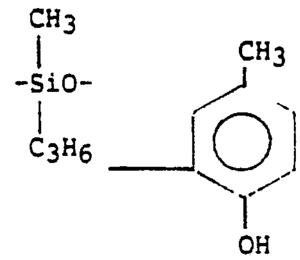
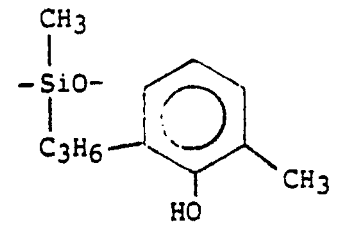
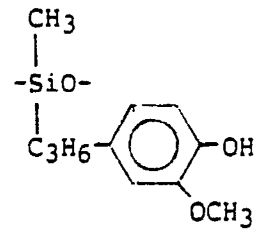

Under the hydrosilylation conditions employed in the patent, (e.g. Example I) phenolic hydroxyls also react with the organohydrogensiloxane units of the starting polyorganosiloxane, thus forming crosslinks between polyorganosiloxane molecules and leading to abnormally high viscosities or gelation.

Ger. Offen. DE 3,514,549 discloses reacting hydroxyphenylimidonorbornyl terminated polyorganosiloxanes with dibasic acid chlorides to form polyester block copolymers.

JP 61 36358 discloses using certain polyorganosiloxanes containing

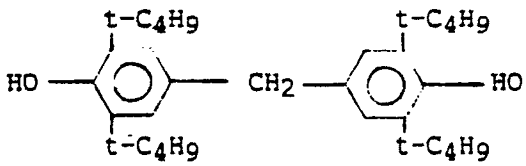

or

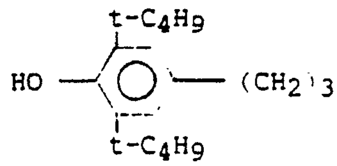

groups substituted with organic radicals at the ring positions ortho and para to the hydroxy groups as antioxidant additives to polyorganosiloxane fluids.

In U.S. 3,410,820, a room temperature curable vulcanizing composition is described containing an organosilicon polymer with hydroxyphenyl-alkylene groups. These polysiloxanes are cured by oxygen at room temperature in the presence of a basic complex of a copper salt with a nitrogen containing heterocyclic compound such as pyridine and the like. Due to the odor and toxicity of such materials. serious questions concerning consumer acceptance are presented. EP 0 240 095 describes using a complex of a cupric ion (Cu (II)) and an organosilicon compound having at least one group with two amino nitrogens bonded to a silicon atom as a catalyst for oxidative coupling of the same polyorganosilicon compounds.

The polyorganosiloxanes containing hydroxyphenylalkyl substituents described in these patents are made by hydrosilylation of vinyl or allyl phenols with polyorganosiloxane copolymers containing organohydrogensiloxane units (e.g. MeHSiO) such as high molecular weight dimethyl silicon gums, in the presence of a platinum catalyst as in the following reaction:

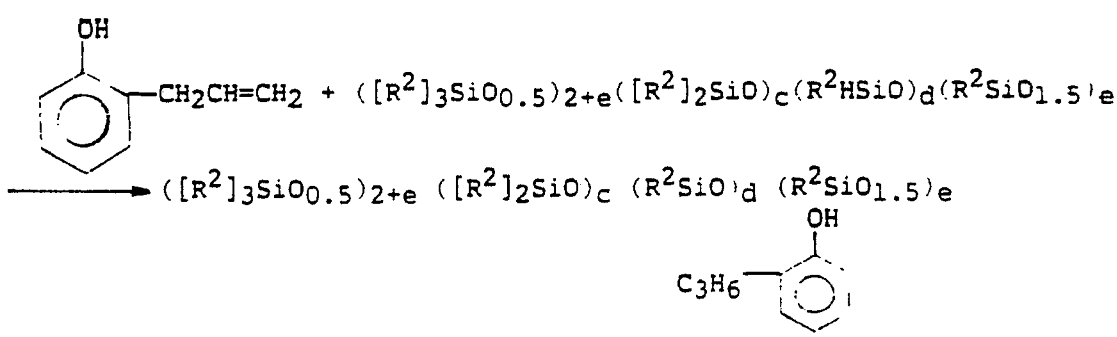

Unfortunately, during the hydrosilylation reaction, additional reactions occur between the phenolic hydroxyl groups and the silylhydrogen groups of the starting polyorganosiloxane to form phenyl-oxygen-silicon bonds. Under the reaction conditions, these phenyl-oxygen-silicon bonds are attacked and uncontrolled amounts of trifunctional, $MeSiO_{1.5}$, units may be incorporated into the copolymer structure. This leads not only to uncontrolled branching of the siloxane chains in lower molecular weight products and a reduced yield of product of the desired structure; but, more importantly for the present invention, to structures that contribute to unpredictable and premature crosslinking and abnormally high viscosities or gelation in higher

molecular weight products. This effect is illustrated by Examples 5 and 6. Such reactions may render the product useless for applications requiring elastomeric properties where the use of higher molecular weight siloxanes is required. Applicant is not aware of any commercial RTV products based upon the products made in accordance with the teachings of these patents.

The same problems are encountered when vinyl- or allyl-substituted phenol are hydrosilylated in the presence of a platinum catalyst to form hydroxyphenylalkyl substituted silanes according to the following reaction,

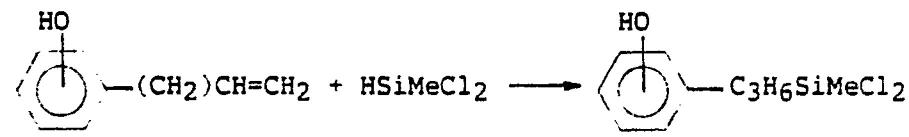

and the dichlorosilane product then is co-hydrolyzed and condensed with other organosilane monomers, e.g., $Me_3SiCl$ and $Me_2SiCl_2$, to form the siloxane copolymers.

## DESCRIPTION OF THE INVENTION

The present invention relates to a specific class of polyorganosiloxanes and compositions containing these polyorganosiloxanes that, when properly catalyzed, are convertible to crosslinked solids at ambient temperatures and above, e.g., at room temperatures and above, either upon exposure to gaseous oxygen (in air or other gases) or upon admixture with certain oxidizing agents or oxidants such as organic peroxides. The polyorganosiloxanes of the invention are acyclic and have linear or slightly branched siloxane chains, at least some of which are terminated with triorganosiloxane units. Organic substituents on these polymers are monovalent organic radicals which are attached to silicon atoms on the polymer backbone or on pendant groups through carbon-to-silicon bonds. Preferably, methyl radicals make up the major portion of the organic substituents.

Polyorganosiloxanes having a viscosity of at least about 1000 centipoise (cp) are preferred, more preferably at least about 2000 cp, and most preferably at least about 4000 to 5000 cp. Products having viscosities as high as 100,000 and higher can be useful. The upper limit on a suitable viscosity depends upon a variety of considerations and will be apparent to those skilled in the art.

A distinctive feature of the ambient temperature curable polyorganosiloxanes of the present invention is the presence of a limited number of (hydroxyphenyl)alkyl substituents:

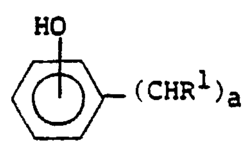

where $R^1$ is either a hydrogen atom or a methyl group, and a is a number having a value of 2 or 3. Although less preferred due to availability and cost, (hydroxynaphthyl) alkyl substituents as shown below also are effective reactive moieties.

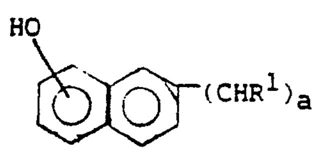

where $R^1$ is either a hydrogen atom or a methyl group, and a is a number having a value of 2 or 3. For convenience in presentation, however, only the (hydroxyphenyl) alkyl embodiment will be discussed hereafter.

This substituent is positioned on the siloxane chain in either a terminal or pendant position or both and is present in an amount such that, on average, there is at least one and preferably two or more substituents per siloxane molecule. Polyorganosiloxanes which cure to products having elastomeric properties are particularly preferred. The term "elastomeric" as used herein and in the claims means a cured polyorganosiloxane which, after being stretched, at room temperature, to twice its original length and then released, forcibly retracts over a short period of time to less than 160% of its original length (i.e. exhibits a 40% recovery). It is preferred, therefore, that there be at least one (hydroxyphenyl) alkyl substituent per 500 silicon atoms (monomer units) in the polyorganosiloxane and that each siloxane molecule not have more than about one (hydroxyphenyl) alkyl substituent per 100 silicon atoms (100 monomer units).

Thus, the ambient temperature curable polyorganosiloxanes of the present invention contain, per molecule, at least one (hydroxyphenyl)alkyl radical bonded to a silicon atom through a carbon-to-silicon linkage. The remaining valences of silicon are satisfied either by silicon-to-oxygen-to-silicon bonds in the siloxane (polymer backbone network) or by a monovalent organic radical which is bonded to a silicon atom through a carbon-to-silicon linkage.

Another distinctive feature of the ambient temperature curable polyorganosiloxanes of the present invention is that they are substantially free of crosslinking through said (hydroxyphenyl) alkyl substituents. Stated another way, substantially none of the hydroxyphenyl moieties of the polyorganosiloxanes in the composition have participated in premature reactions to form phenyl-oxygen-silicon crosslinks. Rather, substantially all are available for participating in crosslinking reactions during the ambient temperature cure. Thus, substantially none of the (hydroxyphenyl) alkyl-substituted polysiloxanes in the ambient temperature curable compositions of the present invention are crosslinked one to another through phenyl-oxygen-silicon bonds.

The second part of the two-component curable composition of the present invention is a metallopolyorganosiloxane which contains a catalytic metal, such as copper, in chelated form. The metallopolyorganosiloxane comprises the reaction product of a compound of the chelatable catalytic metal, such as a copper salt, and a polyorganosiloxane having at least one salicylaldiminoalkyl radical per molecule. The salicylaldiminoalkyl radical is bonded to a silicon atom of the polyorganosiloxane through a carbon-to-silicon bond. Any remaining valences of silicon in the polyorganosiloxane are satisfied either by silicon-to-oxygen-to-silicon bonds or by monovalent organic radicals bonded to a silicon atom through carbon-to-silicon bonds.

There are significant and critical differences between the organosiloxane polymers and compositions of this invention and the prior art RTV silicone types:

(1) With regard to the siloxanol-silicate types, the polymers and compositions of this invention do not require silanol groups, organic silicate or polysilicate crosslinkers, or the presence of water. Such groups and components, though not necessary, may optionally be included if desired.

2) With regard to the moisture reactive types, the polymers and compositions of this invention do not require the presence of hydrolyzable groups bonded to a silicon atom or contact with moisture for hydrolytic initiation of the RTV process. Also, obnoxious by-products of a condensation reaction are not produced. Hydrolyzable groups may optionally be included if desired.

3) With regard to the vinyl-hydrosiloxane types, the polymers and compositions of this invention do not require the simultaneous presence of SiH and Si-vinyl groups and a platinum-containing catalyst for crosslinking, although such groups and components may optionally included if desired.

4) with regard to the oxygen-reactive mercaptoalkyl types, the polymers and compositions of this invention do not require the presence of mercaptoalkyl or other thio-organic groups on silicon as crosslinking sites, although as above, such substituents may optionally be present if desired.

5) With regard to the oxygen-reactive polyunsaturated olefinic types, the polymers and compositions of this invention do not require the presence of polyunsaturated organic substituents on silicon to achieve crosslinking, though such substituents may he present if desirable.

The ambient temperature curable polyorganosiloxanes of this invention have an average molecular weight sufficient to provide a viscosity of at least about 1000 cp and can be represented by the average formula:

$M_mSiO_{(4-m)/2}$ (I)

in which

M represents a monovalent organic radical containing 1 to 20 carbon atoms, preferably 1 to 18 carbon atoms, and more preferably 1 to 12 carbon atoms which is attached to a silicon atom through a carbon-to-silicon bond, and

m is a number having an average value of at least 1 but not greater than 3,

and are characterized in that each polyorganosiloxane molecule has at least one monovalent organic radical M which is a (hydroxphenyl) substituted alkyl radical or (hydroxynaphthyl) alkyl radical represented by formulae (IIA) and (IIB):

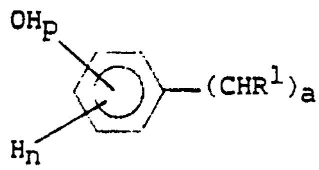 or (IIA)

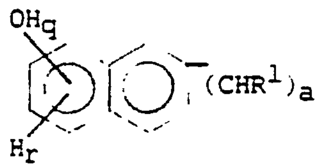 (IIB)

in which
$R^1$ is either a hydrogen atom or a methyl radical and a is a number having a value of 2 or 3,
and wherein n and p are integers of 1 to 4 designating the number of phenyl ring substituents such that $n + p \leq 5$, q and r are integers of 1 to 6 designating the number of naphthyl ring substituents such that $g + r \leq 7$, and at least one hydrogen atom (H) is substituted at either an ortho or para position relative to a hydroxyl (OH) group. The ambient temperature curable polyorganosiloxanes are substantially free of phenyl-oxygen-silicon bonding (crosslinking).

As recognized by those skilled in the art, such polyorganosiloxanes will contain a distribution of molecules of differing molecular weights and each molecule will potentially contain a distribution of monoorganosiloxane, diorganosiloxane, and triorganosiloxane substituents. Thus, for any particular molecular distribution, an average value of m can be calculated and will lie between 1 and 3.

Suitable hydroxyphenyl substituted alkyl radicals can be represented by formula (III):

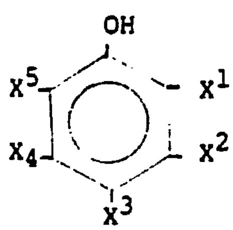 (III)

in which at least one of the substituents $X^b$, where b equals 1, 3 or 5, is a hydrogen atom and one of the substituents $X^b$, b equals 1, 2, 3, 4 or 5, is the radical $-(CHR^1)_a$. For example, suitable hydroxyphenyl substituted alkyl radicals can be represented by one of the following:

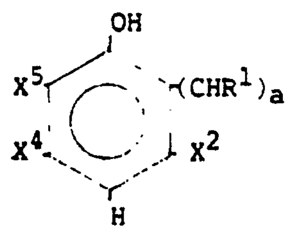
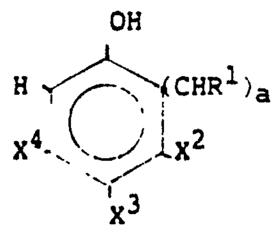

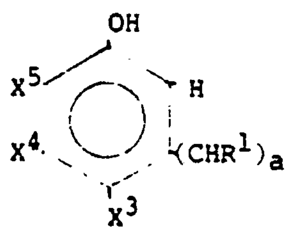
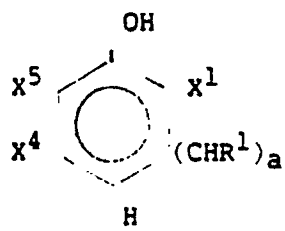
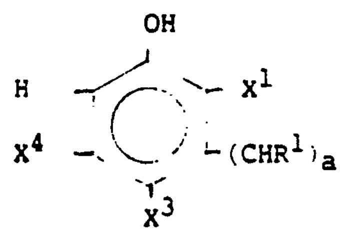

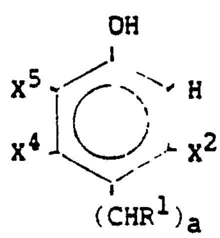
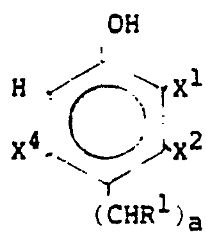

and the remaining substituents can be selected from hydrogen, hydroxyl, alkoxy, or alkyl radicals. For example, suitable alkyl radicals include methyl, ethyl, propyl, butyl, pentyl, hexyl, cyclobutyl, cyclopentyl, cyclohexyl and the like. Suitable alkoxy radicals include methoxy, ethoxy, propoxy and the like. The nature of additional substituents or their presence or absence is not critical to the present invention, provided that such substituents do not adversely affect the properties or interfere with the cure of the organopolysiloxane.

Some specific examples of suitably hydroxyphenyl-substituted alkyl radicals are:

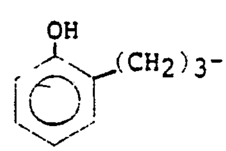
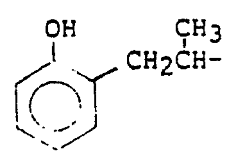
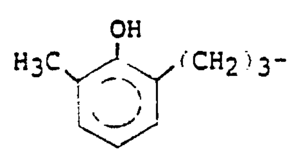

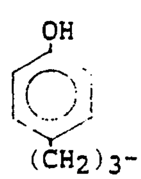
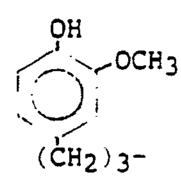
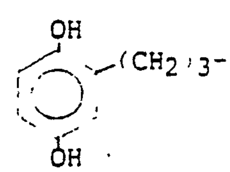

One preferred class of ambient temperature curable polyorganosiloxanes within the scope of the present invention is represented by the average formula:

$([R^2]_3SiO_{0.5})_{2+e}([R^2]_2SiO)_c(R^2R^3SiO)_d(R^2SiO_{1.5})_e$

in which

$R^2$ represents monovalent hydrocarbon radicals, having from 1 to 20 carbon atoms, preferably from 1 to 18 carbon atoms and more preferably from 1 to 12 carbon atoms, such as methyl, vinyl, or phenyl. The $R^2$'s in the formula may be the same or different

$R^3$ is a hydroxyphenyl substituted alkyl radical according to formula (II)

c is a number from 3 to about 6,000, preferably from 100 to about 3,000,

d is a number from at least 1 to about 100, preferably from 1 to about 30,

e is a number from 0 to about 50, preferably from 0 to about 20 and

The sum of c + d + e is no greater than about 6,000, preferably no greater than about 3,000.

A particularly preferred class of ambient temperature curable polyorganosiloxanes are those in which the $R^2$'s are methyl, and the hydroxyphenyl substituted alkyl radical $R^3$ is either 3-(2-hydroxyphenyl)propyl;

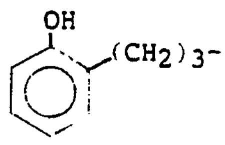

1-methyl-2-(2-hydroxyphenyl)ethyl;

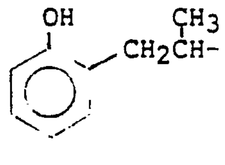

3-(3-methoxy-4-hydroxyphenyl)propyl;

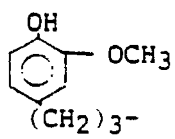

1-methyl-2-(3-methoxy-4-hydroxyphenyl)ethyl;

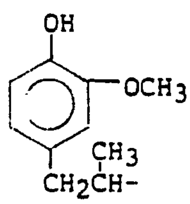

or combinations thereof.

Typical of the monovalent organic radicals which are attached to a silicon atom of the polyorganosiloxane through a carbon-to-silicon bond and which are represented above by M or $R^2$ are:

alkyl groups (including cycloalkyl) having 1 to 12 carbon atoms such as methyl, ethyl, propyl, n-butyl, 3,3-dimethylbutyl, n-hexyl, n-octyl, n-dodecyl, cyclobutyl, cyclopentyl, cyclohexyl and the like,

alkenyl groups such as vinyl, allyl, cyclohexenyl, and the like

heterofunctional alkyl groups such as 2-cyanoethyl, 3-cyanopropyl, 3-chloropropyl, 3,3,3-trifluoropropyl, 3-aminopropyl, 4-aminobutyl, 4-amino-3-methylbutyl, 3-(2-aminoethyl)aminopropyl, 4-(phenylamino)butyl, 4-(dimethylamino)butyl, 3-hydroxypropyl, 2-mercaptoethyl, 3-mercaptopropyl, 3-glycidoxypropyl, 2-(3,4-epoxycyclohexyl) ethyl, 3-methacryloxypropyl, 3-isocyanatopropyl, and the like

aryl groups such as phenyl, chlorophenyl tolyl, xylyl, naphthyl and the like, and

aralkyl groups such as 2-phenylethyl, 2-(p-tolyl)ethyl, 3-phenylpropyl, 2-(nitrophenyl)ethyl, 3-(aminophenyl)-propyl, and the like.

However, any monovalent organic radical can be used so long as it does not adversely affect the reactivity of the hydroxyphenyl substituted alkyl moieties of the polyorganosiloxane in the compositions of the present invention or its properties, and it is not otherwise deleterious to the specific application intended.

The polyorganosiloxanes of this invention preferably are prepared by a process which allows control over the average molecular size of the siloxane and its structure and which prevents undesirable side-reactions which contribute to premature branching or crosslinking and lead to abnormally high viscosities or gelation. The preferred process consists essentially of the following three steps:

(A) Initial preparation of a linear polyorganosiloxane copolymer containing trimethylsiloxy-, dimethylsiloxy-, and methylhydrogensiloxy units in desired proportions by methods well-known in the art

such as acid catalyzed siloxane equilibration. Typical preparations are given in EXAMPLES 1, 2, 3 and 4. These materials also are commercially available, e.g., from Petrarch Systems. Inc.

(B) Hydrosilylating a phenyltriorganosilyl ether containing an olefinically unsaturated ring substituent, e.g., allylphenyltrimethylsilyl ether, using the copolymer of step (A) in the presence of a platinum catalyst to form a polyorganosiloxane having at least one acid hydrolyzable monovalent (triorganosiloxy-substituted phenyl) alkyl moiety, e.g., a (trimethylsiloxy-substituted phenyl) alkyl, bonded to a silicon atom of the polyorganosiloxane through a carbon-to-silicon linkage of the formula:

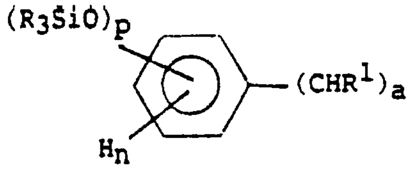

or (D)

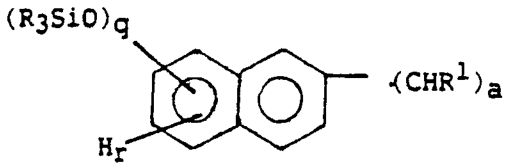

(E)

wherein $R^1$ is either hydrogen or methyl; a is a number having a value of 2 or 3, n and p are integers of 1 to 4 such that $n + p \leqq 5$, q and r are integers of 1 to 6 such that $1 + r \leqq 7$, at least one H is substituted at an ortho or para position relative to a ($R_3SiO$), R is a monovalent hydrocarbon radical and wherein said (triorganosiloxyphenyl) alkyl radical or (triorganosiloxynaphthyl) alkyl radical is bonded to a silicon atom of said polyorganosiloxane through a silicon-to-carbon bond. A typical preparation is given in EXAMPLE 8. As the direct precursor of the ambient temperature curable polyorganosiloxanes of the present invention, such polyorganosiloxanes have most of the same attributes. Thus, discussions both above and below relating to the (hydroxyphenyl) alkyl substituted polyorganosiloxanes also apply to these (triorganosiloxy-subztituted phenyl) alkyl substituted polyorganosiloxanes.

(C) Hydrolyzing the polyorganosiloxane produced by step (B) under conditions of time, temperature, and weak acid catalysis which cleave the triorganosiloxyphenyl substituents and form the desired hydroxyphenyl moieties, but which do not attack the polysiloxane structure. A typical preparation is given in EXAMPLE 9.

The ambient temperature curable polyorganosiloxanes, prepared as described above, can be crosslinked by exposing them to an oxygen source (oxidizing agent) such as gaseous oxygen, e.g. air, or an organic peroxide, in the presence of certain metallopolyorganosiloxanes. The polyorganosiloxanes also can be crosslinked by reaction with an aldehyde using known acid or base catalysts. In this latter instance, such polysiloxanes can be used as reactive plasticizers for phenolic resins.

Metallopolyorganosiloxanes of this invention are the reaction products of a polyorganosiloxane having at least one 2-hydroxy-benzaldimino-substituted alkyl moiety bonded to a silicon atom through a carbon-to-silicon linkage and a salt of a metal selected from the group consisting of copper, cobalt, manganese, cerium, and mixtures thereof, preferably a copper salt. Suitable metal salts include those that are moderately soluble in methyl alcohol or ethyl alcohol such as the metal formates, metal acetates, metal chlorides, metal bromides, metal iodides, and metal nitrates.

Polyorganosiloxanes suitable for making the metallopolyorganosiloxanes of this invention can be represented by the average formula (VI):

$M'_{m'}SiO_{(4-m')/2}$ (VI)

in which

$M'$ represents a monovalent organic radical containing 1 to 20 carbon atoms, preferably 1 to 18 carbon atoms and more preferably 1 to 12 carbon atoms which is attached to a silicon atom through a carbon-to-silicon bond, and

$m'$ is a number having an average value of at least 1 but not greater than 3,

and are characterized in that each polyorganosiloxane molecule has at least one monovalent organic radical $M'$ which is a 2-hydroxy-benzaldimino substituted alkyl radical represented by formula (VII):

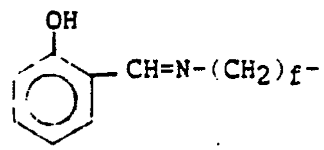

(VII)

in which

f is an integer having a value of at least 2 but not greater than 8, and preferably having a value of 3 or 4.

As recognized by those skilled in the art, such polyorganosiloxanes will contain a distribution of molecules of differing molecular weights and each molecule will potentially contain a distribution of monoorganosiloxane, diorganosiloxane, and triorganosiloxane substituents. Thus, for any particular molecular distribution, an average value of m can be calculated and will lie between 1 and 3.

Preferably, polyorganosiloxanes for preparing the metallopolyorganosiloxanes of the present invention have two 2-hydroxybenzaldimino substituted alkyl moieties positioned at the ends of the siloxane polymer chain. Larger numbers of such moieties can contribute to unwanted degree of crosslinking. Also, the molecular weight of the polyorganosiloxane used to prepare the metallopolyorganosiloxanes of the present invention is selected to maximize its solubility in the ambient temperature curable polyorganosiloxane composition.

One preferred class of such polyorganosiloxanes is represented by the average formula (VIII):

$([R^4]_2R^5SiO_{0.5})_2(R^4)_2SiO)_g$ (VIII)

in which

$R^4$ represents a monovalent hydrocarbon radical preferably having from 1 to 20 carbon atoms, more preferably having from 1 to 18 carbon atoms, and most preferably from 1 to 12 carbon atoms, such as methyl, vinyl, or phenyl. The $R^4$'s in the formula may be the same or different,

$R^5$ is a 2-hydroxy-benzaldimino substituted alkyl radical according to formula (VII) and

g is a number from 0 to about 1,000

Typical of the monovalent organic radicals which are attached to a silicon atom of the polyorganosiloxane through a carbon-to-silicon bond and which are represented above by $M'$ or $R^4$ are:

alkyl groups (including cycloalkyl) having 1 to 12 carbon atoms such as methyl, ethyl, propyl, n-butyl, 3,3-dimethylbutyl, n-hexyl, n-octyl, n-dodecyl, cyclobutyl, cyclopentyl, cyclohexyl and the like,

alkenyl groups such as vinyl, allyl, cyclohexenyl, and the like

heterofunctional alkyl groups such as 2-cyanoethyl, 3-cyanopropyl, 3-chloropropyl, 3,3,3-trifluoropropyl, 3-aminopropyl, 4-aminobutyl, 4-amino-3-methylbutyl, 3-(2-aminoethyl)aminopropyl, 4-(phenylamino)butyl, 4-(dimethylamino)butyl, 3-hydroxypropyl, 2-mercaptoethyl, 3-mercaptopropyl, 3-glycidoxypropyl, 2-(3,4-epoxycyclohexyl) ethyl, 3-methacryloxypropyl, 3-isocyanatopropyl, and the like

aryl groups such as phenyl, chlorophenyl tolyl, xylyl, naphthyl and the like, and

aralkyl groups such as 2-phenylethyl, 2-(p-tolyl)ethyl, 3-phenylpropyl, 2-(nitrophenyl)ethyl, 3-(aminophenyl)-propyl, and the like.

However, any monovalent organic radical can be used so long as it does not adversely affect the reactivity of the 2-hydroxybenzaldimino-substituted alkyl moieties of the polyorganosiloxane in the compositions of the present invention or its properties, and it is not otherwise deleterious to the specific application intended. A particularly preferred class of such polyorganosiloxanes are those in which the $R^4$'s are all methyl.

The polyorganosiloxanes of formula (VI) can be prepared by reacting 2-hydroxy-benzaldehyde (salicylaldehyde) with a polyorganosiloxane having a (primary) aminoalkyl moiety bonded to a silicon atom through a carbon-to-silicon linkage represented by the average formula (IX):

$M''_{m''}SiO_{(4-m'')/2}$ (IX)

in which

$M''$ represents a monovalent organic radical containing 1 to 20 carbon atoms, preferably 1 to 18 carbon atoms, and more preferably 1 to 12 carbon atoms, which is attached to a silicon atom through a carbon-to-silicon bond,

$m''$ is a number having an average value of at least 1 but not greater than 3,

and are characterized in that each polyorganosiloxane molecule has at least one monovalent organic radical $M''$ which is an amino-substituted alkyl radical represented by formula (X):

$H_2N\text{-}(CH_2)_f\text{-}$ (X)

One preferred class of polyorganosiloxanes within the scope of formula (IX) is represented by the average formula (XI):

$([H_2N(CH_2)_f]R^4{}_2SiO_{0.5})_2(R^4{}_2SiO)g$ (XI)

in which $R^4$,f and g are as defined above. A particularly preferred class of such polyorganosiloxanes are those in which all the $R_4$'s are methyl. A typical preparation is given in EXAMPLE 10.

To prepare a metallopolyorgansiloxane of the present invention, an alcoholic solution of a metal salt of a metal selected from the group consisting of copper, cobalt, manganese, cerium and mixtures thereof is added to a stirred alcoholic solution of a polyorganosiloxane represented by formula (VI) in a proportion that provides one atom of metal for 1, 2 or 3 salicylaldimino groups contained in the polyorganosiloxane, as desired. A typical preparation is given in EXAMPLE 11.

A curable composition according to the present invention can prepared by forming an intimate mixture of one or more of the above-described ambient temperature curable polyorganosiloxanes having at least one (hydroxylphenyl) alkyl radical bonded to a silicon atom through a carbon-to-silicon linkage, as the major polymer component, and one or more of the above-described metallopolyorganosiloxanes as a minor polymer component, together with plasticizers, fillers and other ancillary components as desired. The minor metallopolyorganosiloxane polymer component is included in the composition in an amount sufficient to provide from about 5 to about 10,000 parts (by weight) of contained metal per million parts by weight of the major ambient temperature curable polyorganosiloxane polymer component, preferably from about 20 to about 2000 parts by weight metal on the same basis, and more preferably from about 500 to 2,000 parts by weight.

Plasticizer components suitable for use in the compositions of the present invention are either reactive or non-reactive types and are well known to those skilled in the art of RTV silicones. Reactive plasticizers are capable of reacting during the curing process to become largely unextractable from the cured compositions. Non-reactive plasticizers include polyorganosiloxane oils and gums which bear only alkyl and aryl hydrocarbon substituents and hydrocarbon mineral oils. For the compositions of the present invention, reactive plasticizers include monomeric substituted phenols, soluble phenol-aldehyde condensates, and low molecular weight epoxy polymers. Plasticizer components are used in concentrations up to about 100 parts per hundred parts of the major polymer component and preferably from about 1 to about 50 parts per hundred parts of the major polymer component.

A variety of particulate and fibrous fillers also can be used as components in the compositions of this invention, as for example, those described in the Pigment Handbook, T.C. Patton ed., Vol. I, John Wiley and Sons, New York, 1973. Of particular interest are the following fillers: titanium dioxide, zinc oxide, antimony oxide, natural and synthetic calcium carbonates, natural and synthetic silicas, natural and synthetic silicates and aluminum, calcium and magnesium. carbon blacks, graphite, flaked aluminum metal, chopped glass fiber, and the like.

In addition, the curable compositions of this invention may contain other ancillary components which function as coloring pigments, flow control agents, thermal stabilizers, ultra-violet absorbants, odorants, etc.

The curable compositions of this invention undergo crosslinking at ambient temperatures e.g. at temperature above about 10° C (50° F) upon exposure to an oxygen source or oxidizing agent, such as gaseous oxygen or an organic peroxide. Suitable organic peroxides include: benzoyl peroxide, t-butyl perbenzoate, lauroyl peroxide, and 2,5-dimethyl-2,5-bis(t-butyl-peroxy) hexane. Organic peroxides having at least one acyl group, such as the known acyl peroxides and the acylalkyl peroxides, are preferred.

Typical use temperatures for the curable compositions of this invention are between about 10° C (50° F) or lower to about 50° C (122° F) or higher. Elevated temperatures can be used to accelerate the curing reaction if desired. Other techniques for regulating the rate of cure include changes in catalyst concentration, the use of a small amount of low molecular weight, high functionality polyorganosiloxanes having (hydroxyphenyl) alkyl moieties and the like. Such procedures will be appreciated by those skilled in the art.

During the curing process, the compositions of this invention pass through consecutive stages first of thickening (Th), then becoming elastic gels (EG) and then becoming cured throughout elastic solids (CT). Some of the curable compositions can become fully cured within a matter of a few hours whereas others may be formulated to take several weeks to become fully cured.

The following examples are presented to illustrate and not limit the invention. Unless otherwise indicated, all parts and percentages are on a weight basis and all temperatures are on the Centigrade scale.

## EXAMPLE 1

This example illustrates preparation of a trimethylsiloxy-terminated copolymer of methylhydrogensiloxane and dimethylsiloxane by acid-catalyzed siloxane equilibration. The copolymer can be represented by the nominal formula $(Me_3SiO_{0.5})_2(Me_2SiO)_{1234}(MeHSiO)_4$.

A mixture of
199.12 parts octamethylcyclotetrasiloxane
0.52 parts tetramethylcyclotetrasiloxane
0.35 parts hexamethyldisiloxane
0.10 parts trifluoromethanesulfonic acid
was stirred under a nitrogen atmosphere at room temperature for several hours until the mixture visibly thickened. The mixture then was kept quiescent for a total of 72 hours. Thereafter, 0.16 part hexamethyldisilazane was added to neutralize the mixture and the mixture was stirred for 2 hours. Volatiles then were removed from the mixture by stirring it under a reduced pressure (0.1 Torr) for 2 hours at room temperature and then for an additional 4 hours at 40 °C. The product was a colorless liquid having a viscosity of 39,250 centipoises (Brookfield) at 22 °C.

## EXAMPLE 2

This example illustrates preparation of another trimethylsiloxy terminated copolymer of methylhydrogensiloxane (0.3 wt-%) and dimethylsiloxane by acid-catalyzed siloxane equilibration.

A mixture of
521.69 parts octamethylcyclotetrasiloxane
1.58 parts tetramethylcyclotetrasiloxane
1.73 parts hexamethyldisiloxane
0.25 parts trifluoromethanesulfonic acid
was stirred under a nitrogen atmosphere at room temperature for about 48 hours. Thereafter, 0.40 part hexamethyldisilazane was added to neutralize the mixture and the mixture was stirred for 1 hour. Volatiles were removed from the mixture by stirring it under a reduced pressure (0.3 Torr) for 2 hours at room temperature and then for an additional 6 hours at 40 °C. The siloxane product was a colorless, liquid copolymer having a viscosity of 4100 centipoises (Brookfield) and containing about 0.3 wt-% methylhydrogensiloxane units.

## EXAMPLE 3

This example illustrates preparation of a third trimethylsiloxy-terminated copolymer of methylhydrogensiloxane (1.0 wt-%) and dimethylsiloxane by acid-catalyzed siloxane equilibration.

Using the same procedures as used in Example 2, a mixture of
518.02 parts octamethylcyclotetrasiloxane
5.25 parts tetramethylcyclotetrasiloxane
1.73 parts hexamethyldisiloxane
0.25 part trifluoromethanesulfonic acid
was copolymerized and thereafter neutralized with 0.40 part hexamethyldisilazane

The vacuum stripped copolymer product was a colorless liquid having a viscosity of 3600 centipoises (Brookfield) and containing about 1.0 wt-% methylhydrogensiloxane units.

## EXAMPLE 4

This example illustrates preparation of three additional trimethylsiloxy-terminated methylhydrogensiloxane (0.26 wt-%) and dimethylsiloxane copolymers of various viscosities.

Using the same procedures as used in Example 2, mixtures consisting of

| | A | B | C |
|---|---|---|---|
| Octamethylcyclotetrasiloxane | 199.28 | 199.32 | 199.36 |
| Tetramethylcyclotetrasiloxane | 0.52 | 0.52 | 0.52 |
| Hexamethyldisiloxane | 0.20 | 0.16 | 0.12 |
| Trifluoromethanesulfonic acid | 0.10 | 0.10 | 0.12 |

were copolymerized and each neutralized with 0.16 part hexamethyldisilazane. Each of the vacuum stripped copolymers was a colorless liquid respectively having viscosities of 110,000, 280,000 and 439,000 centipoises (Brookfield).

EXAMPLE 5

This example, illustrates preparation of an adduct of 2-allylphenol and a trimethylsiloxy-terminated methylhydrogensiloxane and dimethylsiloxane copolymer, i.e., the hydrosilyation of 2-allylphenol with copolymer.

To 100.00 parts of a commercially available trimethylsiloxy-terminated copolymer of methylhydrogensiloxane and dimethylsiloxane containing, by analysis, 9.72 wt-% methylhydrogensiloxane units (PS-123.5, Petrarch Systems, Inc., Bristol, Pa.) dissolved in 100.00 parts toluene were added 19.50 parts of 2-allylphenol. The mixture was stirred under a nitrogen atmosphere and was heated to 70° C. Thereafter, a complex of platinum dichloride and divinyltetramethyldisiloxane (PC-075, Petrarch Systems, Inc.) was added as a 10 wt-% solution in toluene in four equal 0.1 part by weight increments. The mixture was held at 70° C for 2 hours, and then at 100° C for an additional hour. After cooling to room temperature, the mixture was desolvated by sparging with nitrogen. The reaction product was a slightly viscous, amber-colored liquid having a faint phenolic odor.

EXAMPLE 6

This example also illustrates the hydrosilylation of 2-allylphenol directly with a trimethyloxy-terminated copolymer of methylhydrogensiloxane and dimethylsiloxane.

(A) A solution of 100.00 parts of the copolymer of Example 3 in 100.00 parts toluene was stirred under a nitrogen atmosphere at a temperature of 40-45° C. 2.40 parts of 2-allylphenol and 0.50 part triethylamine were added to the stirred solution followed by 0.010 part of chloroplatinic acid as a 2.5 wt-% solution in 1,2-dimethoxyethane. After 1 hour at 40-45° C, the mixture was heated to a temperature of 150° C to remove the toluene solvent and other volatiles. Heating the mixture to 150° C, ostensibly to remove solvent, caused it to form a crosslinked, rubbery gel.

(B) The experiment of Example 6A was repeated except that the toluene solvent was replaced with petroleum ether and the catalyzed reaction mixture was held at 40-45° C for 24 hours instead of just one hour. When the solvent was stripped from the reaction mixture at a reduced pressure and at a temperature of 40-45° C, the mixture again formed a crosslinked, rubbery gel.

NMR analysis of the gels indicated the presence of phenyl-oxygen-silicon bonds indicative of reactions occurring between a phenol hydroxyl and the siloxane polymer. Such reactions cause premature crosslinking and high viscosities or gelation in the siloxane product.

EXAMPLE 7

This example illustrates preparation of 2-allylphenyltrimethylsilyl ether.

To 65.02 parts of 2-allylphenol stirred under a nitrogen atmosphere (reaction flask having a slowly vented nitrogen stream) was added 58.67 parts of hexamethyldisilazane in five equal increments at five minute intervals. The resulting mixture then was heated to reflux (boiling) and refluxed until ammonia was no longer detectable in the vented nitrogen stream. Excess hexamethyldisilazane was distilled from the mixture and a pale yellow liquid product containing about 96% by weight of the silyl ether was recovered.

EXAMPLE 8

This example illustrates hydrosilylation of 2-allylphenyltrimethylsilyl ether with a trimethylsiloxy-terminated copolymer of methylhydrogensiloxane and dimethylsiloxane.

(A) Using the procedure of Example 6(B), a solution of 100.00 parts of the copolymer of Example 3 in 100.00 parts of petroleum ether was stirred under a nitrogen atmosphere at 40-45° C. Thereafter, 3.88 parts of 2-allylphenyltrimethylsilyl ether and 0.50 part of triethylamine were added followed by 0.010 part of chloroplatinic acid catalyst. The mixture was held at a temperature of about 40-45° C for about 16 hours. At

the end of that time period most of the petroleum ether solvent had been evaporated from the reaction mixture. The reaction mixture was a liquid with no visible gel present.

Residual volatiles then were removed by stripping the mixture under a reduced pressure. The stripped product was a pale yellow liquid which remained free of visible gel through 21 days of storage under a nitrogen atmosphere at room temperature. NMR analysis showed only phenyl-O-$SiMe_3$ structure present and no detectable phenyl-O-SiMeO- structure which would be indicative of undesired crosslinking reactions at the phenyl oxygen (originally the phenol hydroxyl).

(B) The above preparation was repeated on a larger scale (2.5X's) to produce additional gel-free liquid product.

EXAMPLE 9

This example illustrates the acid hydrolysis of a copolymer containing 3-(2-trimethylsiloxyphenol)propyl substituents bonded to a silicon atom of a siloxane polymer to form a copolymer containing 3-(2-hydroxyphenyl)propyl substituents.

A solution containing 20.00 parts by weight of the copolymer of Example 8 dissolved in 40.00 parts tetrahydrofuran solvent was stirred under a nitrogen atmosphere at room temperature. 0.45 part by weight of glacial acetic acid and 0.68 part by weight of water were added to the mixture and it was stirred for 48 hours. Thereafter, the mixture was heated at a temperature of 40-45° C under a reduced pressure (10 Torr) for 3 hours to remove residue solvent. The recovered product was a pale yellow, gel-free liquid. A thin film of the product after exposure to the atmosphere for 6 days showed no change in color and remained free of gel.

EXAMPLE 10

This example illustrates preparation of a 3-(2-hydroxybenzaldimino)propyl terminated dimethylsiloxane polymer.

A mixture containing 100.0 parts by weight of a commercially available 3-aminopropyl-terminated dimethylsiloxane polymer (PS-510, Petrarch Systems, Inc.), 200.0 parts by weight of toluene, and 8.7 parts by weight of salicylaldehyde was stirred under a nitrogen atmosphere, i.e., a slowly vented nitrogen stream, at reflux temperature for about 2 hours to cause a slow removal of the toluene/water azeotrope. Thereafter, residual toluene was stripped from the reaction mixture under a reduced pressure (1.0 Torr) and the resulting product was cooled and stored under a nitrogen atmosphere. The recovered product was a golden yellow, clear liquid.

EXAMPLE 11

This example illustrates the preparation of several metallopolyorganosiloxanes useful as catalysts for curing (crosslinking) a polyorganosiloxane having 3-(2-hydroxylphenyl) propyl substituents.

To 1.00 part by weight of the copolymer of Example 10 dissolved in 1.00 part deaerated ethanol was added the indicated amounts of various metal salts. The metal salts were added as solutions in deaerated ethanol to give the indicated mol ratios of metal to chelating group (i.e., 3-(2-hydroxybenzaldimino)propyl group).

| Catalyst No. | Metal Salt | Moles Metal/Chelating Group | Parts Metal Salt/Parts Copolymer |
|---|---|---|---|
| 1 | Copper Bromide | 1/1 | 0.142 |
| 2 | Copper Bromide | 1/2 | 0.071 |
| 3 | Copper Bromide | 1/3 | 0.047 |
| 4 | Manganese Bromide | 1/1 | 0.136 |
| 5 | Manganese Bromide | 1/2 | 0.068 |
| 6 | Manganese Bromide | 1/3 | 0.045 |
| 7 | Cobalt Bromide | 1/1 | 0.139 |
| 8 | Cobalt Bromide | 1/2 | 0.069 |
| 9 | Cobalt Bromide | 1/3 | 0.046 |

The metallopolyorganosiloxanes immediately formed with abrupt color changes. After standing 18 hours, all of the metallopolyorganosiloxane solutions were homogeneous with no visible separation of layers or precipitation of solids.

EXAMPLE 12

This example illustrates the cure of a siloxane copolymer containing 3-(2-hydroxyphenyl)propyl substituents using conventional copper catalysts.

(A) To 10.00 parts of the copolymer of Example 5 were added

0.1040 parts cupric chloride dihydrate dissolved in a mixture of methanol and THF, (1/1 w/w);

0.5960 part by weight of 4-dimethylaminopyridine; and

0.0238 part by weight potassium hydoxide.

A portion of this mixture, sufficient to form a film of about 1 millimeter thick, was poured into a foil cup and exposed to the atmosphere at room temperature; while the remainder was stored in a tightly sealed glass vial. After 91 hours, it was observed that the air-exposed film had cured throughout to a crosslinked, elastic gel; while the product stored in the sealed glass vial remained liquid with no visible thickening or gel formation.

(B) Similarly to subpart (A), 5.00 parts of the same copolymer of Example 5 were mixed with 0.20 part by weight of a copper linoleate drier (siccative) containing 10 wt-% copper. After exposure to the atmosphere at room temperature for 24 hours, a film having about a 1 millimeter thickness showed no visible signs of cure. Heating the same film in air for 1 hour at 65° C followed by an additional hour at 75° C also produced no visible cure.

EXAMPLE 13

This example illustrates that siloxane copolymers containing 3-(2-trimethylsiloxyphenyl)propyl and 3-(2-hydroxyphenyl)propyl substituents do not react with gaseous oxygen in the absence of a suitable catalyst.

The copolymers of Examples 8 and 9 were placed in foil cups in amounts sufficient to form thin films of about 1 millimeter in thickness and were allowed to stand in air at room temperature for 60 days. At the end of that time period, there was no visible change in the color of the copolymer films and no formation of a surface skin or gel.

EXAMPLE 14

This example illustrates the cure of a siloxane copolymer containing hydroxyphenylpropyl substituents upon exposure to the atmosphere in the presence of several metallosiloxane catalysts.

To several portions containing 1.000 part by weight of the copolymer of Example 9 were added the metallosiloxane catalysts of Example 11 as 50 wt-% ethanol solutions in amounts sufficient to provide 1000 parts by weight metal per million parts by weight of the copolymer. The catalyzed copolymer compositions were poured into foil cups, exposed to the atmosphere at room temperature, and observed for development

of crosslinking through gel formation. The results are shown in the table below.

| | | | Appearance After | | |
|---|---|---|---|---|---|
| Composition No. | Catalyst No. | Metal | 0.75 hours | 20 hours | 140 hours |
| 1 | 1 | Cu | Liquid | Liquid | Firm Gel |
| 2 | 2 | Cu | Soft Gel | Firm Gel | Firm Gel |
| 3 | 3 | Cu | Liquid | Soft Gel | Firm Gel |
| 4 | 4 | Mn | Liquid | Soft Gel | Firm Gel |
| 5 | 5 | Mn | Liquid | Soft Gel | Firm Gel |
| 6 | 6 | Mn | Liquid | Liquid | Liquid |
| 7 | 7 | Co | Liquid | Liquid | Liquid |
| 8 | 8 | Co | Liquid | Liquid | Liquid |
| 9 | 9 | Co | Liquid | Liquid | Liquid |

## EXAMPLE 15

This example illustrates the cure of a siloxane copolymer containing hydroxyphenylpropyl substituents catalyzed with various amounts of a metallosiloxane upon exposure to the atmosphere at 45° C.

To 5.000 parts by weight of the copolymer of Example 9 were added the below-indicated amounts of the copper metallosiloxane catalyst of Example 11 (Catalyst No. 2). Thereafter, the mixtures were poured into foil cups to form thin films of about 1 millimeter in thickness. The fims were exposed to the atmosphere at about 45° C and observed for development of crosslinking through gel formation. The results were as follows:

| | | | Appearance After | |
|---|---|---|---|---|
| Composition No. | Catalyst No. 2 (parts) | Copper Metal (ppm) | 24 hours | 48 hours |
| 1 | 0.530 | 1000 | Soft Gel | Firm Gel |
| 2 | 0.265 | 500 | Soft Gel | Soft Gel |
| 3 | 0.053 | 100 | Liquid | Liquid |

## EXAMPLE 16

This example illustrates the cure of a siloxane copolymer containing hydroxyphenylpropyl substituents catalyzed with an *in situ* formed metallosiloxane.

To 5.000 parts by weight of the copolymer of Example 9 were added 0.530 parts of Catalyst No. 2 of Example 11 to form a mixture denominated composition 1. To a second portion of 5.000 parts by weight of the siloxane copolymer of Example 9 were added 0.070 parts by weight of cupric bromide dissolved in a minimum amount of deareated ethanol and 0.495 part by weight of the 3 (2-hydroxybenzaldimino)propyl-terminated copolymer of Example 10 to form a mixture denominated Composition 2. Both compositions were poured into foil cups to form thin films of about 1 millimeter in thickness, the films were exposed to the atmosphere at about 15° C and observed for development of crosslinking through gel formation. The results were as follows:

| | | | Appearance After | |
|---|---|---|---|---|
| Composition No. | Catalyst Form | Copper Metal (ppm) | 24 hours | 48 hours |
| 1 | Preformed[1] | 1000 | Soft Gel | Firm Gel |
| 2 | In Situ | 1000 | Soft Gel | Firm Gel |

[1] Catalyst No. 2 from Example 11.

EXAMPLE 17

This example illustrates the effects that various organic peroxides have on the cure in air at room temperature of a siloxane copolymer containing hydroxyphenylpropyl substituents in the presence of copper metallosiloxane catalysts.

The below-indicated compositions were prepared and then poured into foil cups to form thin films of about 1 millimeter in thickness. The films were exposed to the atmosphere at room temperature, and observed for development of crosslinking through gel formation. Results are shown in the table below.

| Compsition No. | 1 | 2 | 3 | 4 | 5 | 6 |
|---|---|---|---|---|---|---|
| Copolymer of Example 9 | 5.000 | 5.000 | 5.000 | 5.000 | 5.000 | 5.000 |
| Catalyst No. 2 of Example 11 | 0.530 | 0.265 | --- | 0.530 | 0.530 | 0.530 |
| Benzoyl Peroxide | 0.200 | 0.200 | 0.200 | --- | --- | --- |
| t-Butyl Perbenzoate | --- | --- | --- | 0.160 | --- | --- |
| Lauroyl Peroxide | --- | --- | --- | --- | 0.330 | --- |
| 2,5-Dimethyl-2,5-bis (t-butyl-peroxy)hexane | --- | --- | --- | --- | --- | 0.240 |
| Copper metal (ppm) | 1000 | 500 | 0 | 1000 | 1000 | 1000 |
| Appearance After | | | | | | |
| 2 hours | Liquid | Liquid | Liquid | V.Soft Gel | Liquid | Liquid |
| 24 hours | V.Soft Gel | V.Soft Gel | Liquid | Firm Gel | Soft Gel | Liquid |
| 108 hours | Firm Gel | Firm Gel | Soft Gel | Firm Gel | Firm Gel | Firm Gel |

EXAMPLE 18

This example illustrates the effects that two peroxides (benzoyl peroxide and t-butyl perbenzoate) have on the room temperature cures in air and in nitrogen of a metallosiloxane-catalyzed siloxane copolymer containing hydroxyphenylpropyl substituents.

The below-indicated compositions were prepared and poured into foil cups to form thin films of about 1 millimeter in thickness. The films were exposed at room temperature to air or to nitrogen and observed for development of crosslinking through gel formation. The results are presented below.

| Compsition No. | 1 | 2 | 3 | 4 | 5 |
|---|---|---|---|---|---|
| Copolymer of Example 9 | 5.000 | 5.000 | 5.000 | 5.000 | 5.000 |
| Catalyst No. 2 Example 11 | 0.530 | --- | 0.530 | 0.265 | 0.265 |
| Benzoyl Peroxide | --- | 0.200 | 0.200 | --- | 0.200 |
| Metal | Cu | --- | Cu | Cu | Cu |
| Exposed to Air | | | | | |
| 24 hours | Liquid | Liquid | V.Soft Gel | Soft Gel | V.Soft Gel |
| 48 hours | Soft Gel | Soft Gel | Firm Gel | Soft Gel | Firm Gel |
| Exposed to Nitrogen | | | | | |
| 24 hours | Liquid | Liquid | --- | Liquid | --- |
| 48 hours | Liquid | Liquid | --- | Liquid | --- |

| Compsition No. | 6 | 7 | 8 | 9 | 10 | 11 |
|---|---|---|---|---|---|---|
| Copolymer of Example 9 | 5.000 | 5.000 | 5.000 | 5.000 | 5.000 | 5.000 |
| Catalyst No. 2 Example 11 | 0.530 | --- | 0.530 | 0.530 | --- | --- |
| Catalyst No. 5 Example 11 | --- | --- | --- | --- | 0.613 | --- |
| Catalyst No. 5 Example 11 | --- | --- | --- | --- | --- | 0.575 |
| t-Butyl Perbenzoate | --- | 0.160 | 0.160 | 0.256 | 0.160 | 0.160 |
| Metal | Cu | --- | Cu | Cu | Mn | Co |
| Exposed to Air | | | | | | |
| 24 hours | Liquid | Liquid | Firm Gel | V.Firm Gel | Firm Gel | Firm Gel |
| 48 hours | V.Soft Gel | Liquid | Firm Gel | V.Firm Gel | Firm Gel | Firm Gel |
| Exposed to Nitrogen | | | | | | |
| 24 hours | Liquid | Liquid | Firm Gel | V.Firm Gel | V.Firm Gel | Soft Gel |
| 48 hours | Liquid | Liquid | Firm Gel | V.Firm Gel | V.Firm Gel | Soft Gel |

While certain specific embodiments of the invention have been described with particularity herein, it will be recognized that various modifications thereof will occur to those skilled in the art and it is to be understood that such modifications and variations are to be included within the purview of this application and the spirit and scope of the appended claims. For example, polyorganosiloxanes having a (hydrolyzable siloxy-group substituted phenyl) alkyl moiety bonded to a silicon atom, used as a precursor for the ambient temperature curable polyorganosiloxane of the present invention, also can be used as latent antioxidants, for example, for bactericidal or germicidal applications (see e.g., U.S. 4,430,235 which is incorporated herein by reference). The polyorganosiloxanes of this invention, useful for preparing metallopolyorganosiloxanes, also can be used as sequestering agents, e.g., for removing heavy metals from a liquid.

## Claims

1. A polyorganosiloxane composition that is curable to a crosslinked material at an ambient temperature said polyorganosiloxane composition containing a polyorganosiloxane compound having at least one monovalent (hydroxyphenyl) alkyl radical or (hydroxynaphthyl) alkyl radical of the formulae

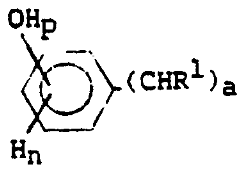

or

(A)

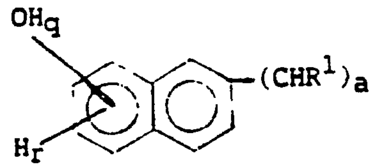

(B)

wherein $R^1$ is either hydrogen or methyl; a is a number having a value of 2 or 3, n and p are integers of 1 to 4 such that $n + p \leqq 5$, 1 and r are integers of 1 to 6 such that $q + r \leqq 7$, and at least one H is substituted at an ortho or para position relative to an OH (hydroxyl) and wherein said (hydroxphenyl) alkyl radical or (hydroxynaphthyl) alkyl radical is bonded to a silicon atom of said polyorganosiloxane through a silicon-to-carbon bond, said polyorganosiloxane composition being substantially free of phenyl-oxygen-silicon or naphthyl-oxygen-silicon bonds.

2. A polyorganosiloxane containing at least one monovalent (2-hydroxybenzaldimino) alkyl radical of the formula

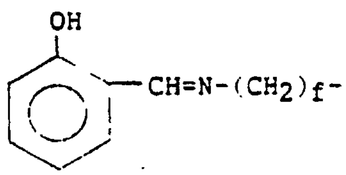

(C)

wherein f is an integer having a value of at least 2 but not greater than 8 and wherein said (2-hydroxybenzaldimino) alkyl radical is bonded to a silicon atom of said polyorganosiloxane through a silicon-to-carbon bond.

3. A polyorganosiloxane according to claim 2 having the average formula

$([R^4]_2R^5\ SiO_{0.5})_2\ ([R^4]_2\ SiO)_g$

wherein $R^4$ is a monovalent organic radical, preferably methyl, $R^5$ is a (2-hydroxybenzaldimino) alkyl radical according to formula (C) and g is a number from 0 to 1000.

4. A metallopolyorganosiloxane comprising the reaction product of

(i) a salt of a metal selcted from the group consisting of copper, cobalt, manganese, cerium and mixtures thereof and

(ii) a polyorganosiloxane according to claim 2 or 3.

5. A composition curable at ambient temperature upon exposure to an oxidizing agent comprising a mixture of

(1) a first polyorganosiloxane containing at least one monovalent (hydroxyphenyl) alkyl radical or (hydroxynaphthyl) alkyl radical of the formulae

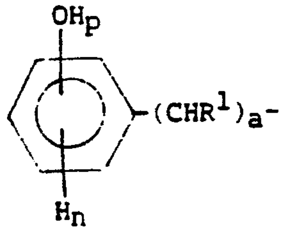 or (A)

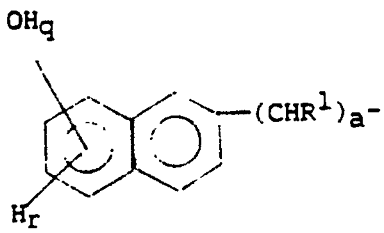 (B)

wherein $R^1$ is either hydrogen or methyl; a is a number having a value of 2 or 3, n and p are integers of 1 to 4 such that $n + p \leqq 5$, q and r are integers of 1 to 6 such that $q + r \leqq 7$, and at least one H is substituted at an ortho or para position relative to an OH (hydroxyl) and wherein said (hydroxyphenyl) alkyl radical or (hydroxynaphthyl) alkyl radical is bonded to a silicon atom of said first polyorganosiloxane through a silicon-to-carbon bond, and

6. A composition according to anyone of claims 1 to 5 wherein said polyorganosiloxane has the average formula:
$([R^2]_3SiO_{0.5})_{2+e}([R^2]_2SiO)_c(R^3R^2SiO)_d(R^2SiO_{1.5})_e$
whrein $R^2$ is a monovalent organic radical, preferably methyl, $R^3$ is a (hydroxyphenyl) alkyl radical according to formula (A), preferably (3-(2-hydroxyphenyl)propyl, 1-methyl-2-(2-hydroxyphenyl)ethyl, 3-(3-methoxy-4-hydroxyphenyl)propyl, 1-methyl-2-(3-methoxy-4-hydroxyphenyl)ethyl or combinations thereof, c is a number from 3 to about 6000, d is a number from at least 1 to about 100, e is a number from 0 to about 50 and the sum of c+d+e is no greater than about 6000.

7. A composition according to anyone of claims 1 to 6 wherein said polyorganosiloxane has a viscosity of at least 1000 centipoise.

8. A composition according to anyone of claims 1 to 7 curable to an elastomeric composition wherein said polyorganosiloxane has a viscosity of at least 100,000 centipoise.

9. A composition according to anyone of claims 1 to 8 curable to an elastomeric composition wherein said polyorganosiloxane has at least one but not more than five (hydroxyphenyl) alkyl radicals per 500 silicon atoms.

10. A composition according to anyone of claims 5 to 9 wherein said second polyorganosiloxane has the average formula:
$([R^4]_2R^5\ SiO_{0.5})_2\ ([R^4]_2\ SiO)_g$
wherein $R^4$ is a monovalent organic radical, $R^5$ is a (2-hydroxybenzaldimino) alkyl radical according to formula (B) and g is a number from 0 to about 1000.

11. A composition according to anyone of claims 4 to 10 containing from about 5 to about 10,000 parts per million of contained metal.

12. A polyorganosiloxane containing at least one acid hydrolyzable, monovalent (triorganosiloxyphenyl) alkyl radical or (triorganosiloxynaphthyl) alkyl radical of the formulae

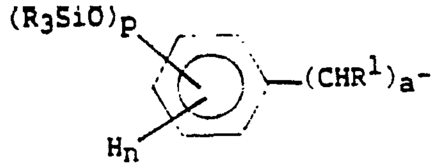 or (D)

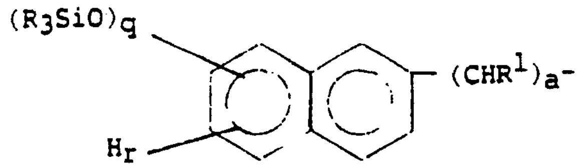 (E)

wherein $R^1$ is either hydrogen or methyl; a is a number having a value of 2 or 3, n and p are integers of 1 to 4 such that $n + p \leq 5$, q and r are integers of 1 to 6 such that $q + r \leq 7$, at least one H is substituted at an ortho or para position relative to a $(R_3SiO)$, R is a monovalent hydrocarbon radical and wherein said (triorganosiloxyphenyl) alkyl radical or (triorganosiloxynaphthyl) alkyl radical is bonded to a silicon atom of said polyorganosiloxane through a silicon-to-carbon bond.

13. A polyorganosiloxane according to claim 12 having the average formula;

$([R^2]_3SiO_{0.5})_{2+e}\ ([R^2]_2SiO)_c\ (R^3\ R^2SiO)_d\ (R^2SiO_{1.5})_e$

wherein $R^2$ is a monovalent organic radical, preferably nethyl, $R^3$ is a (triorganosiloxyphenyl) alkyl radical according to formula (D), wherein R is preferably methyl, c is a number from 3 to about 6000, d is a number from at least 1 to about 100, e is a number from 0 to about and the sum of c+d+e is no greater than about 6000.

14. A process for making an ambient temperature curable polyorganosiloxane comprising:

(A) hydrosilylating (i) a phenyltriorganosilyl ether or preferably phenyltrimethylsilyl ether and especially allylphenyltrimethylsilyl ether or naphthyltriorganosilyl ether containing an olefinically unsaturated ring substituent with (ii) a first polyorgano siloxane having at least one hydrogen-substituted siloxane sub-unit to form a second polyorganosiloxane, and

(B) hydrolyzing the second polyorganosiloxane produced by step (A) in the presence of a weak acid catalyst to form said curable polyorganosiloxane.

15. A process for making a metallopolyorganosiloxane comprising:

(A) reacting 2-hydroxybenzaldehyde with a first polyorganosiloxane having a monovalent aminoalkyl radical bonded to a silicon atom of the first polyorganosiloxane through a carbon-to-silicon linkage to form a second polyorganosiloxane containing at least one monovalent (2-hydroxybenzaldimino) alkyl radical of the formula

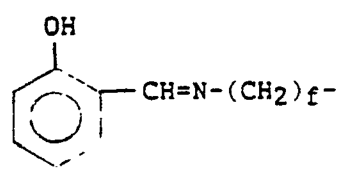 (C)

wherein f is an integer having a value of at least 2 but not greater than 8 and wherein said (2-hydroxybenzaldimino) alkyl radical is bonded to a silicon atom of said second polyorganosiloxane through a silicon-to-carbon bond and

(B) reacting the second polyorganosiloxane containing at least one monovalent (2-hydroxybenzaldimino) alkyl radical produced in step (A) with a salt of a metal selected from the group consisting a copper, cobalt, manganese, cerium and mixtures thereof.

16. composition of claim 5 or 6 or the process of claims 14 wherin said metal is copper.

17. A method for curing the composition of anyone of claims 1 or 6, which comprises reacting said polyorganosiloxane with an aldehyde.

18. A method for curing the composition of claim 5 or 10 which comprises exposing said composition to an oxidizing agent selected from the group consisting of oxygen, an organic peroxide which preferably has at least one acyl group, more preferably is an acylperoxide or an acylalkylperoxide, and especially is selected from the group consisting of benzoyl peroxide, t-butyl perbenzoate, lauroyl peroxide- 2,5-dimethyl-2,5-bis(t-butylperoxy) hexane and mixtures thereof.

19. A method for curing the composition of claim 10 which comprises exposing said composition to an oxidizing agent selected from the group consisting of oxygen, an organic peroxide or a mixture thereof.

20. The cured composition of claim 1, 5, or 10.